# EUROPÄISCHE PATENTSCHRIFT

(11) **EP 3 809 565 B1**
(45) Veröffentlichungstag und Bekanntmachung des Hinweises auf die Patenterteilung: **27.03.2024**
(21) Anmeldenummer: 20202402.2
(22) Anmeldetag: 16.10.2020
(51) Int. Cl.: H02K 5/20, H02K 9/19, B63H 21/17, B63H 5/125, B63J 2/00, H02K 5/15, H02K 11/30

(54) **ANTRIEB FÜR EIN BOOT MIT ELEKTROMOTOR**
DRIVE FOR A BOAT WITH ELECTRIC MOTOR
ENTRAINEMENT POUR UN BATEAU À MOTEUR ÉLECTRIQUE

(30) Priorität: 17.10.2019 DE 102019128105
(43) Veröffentlichungstag der Anmeldung: 21.04.2021
(73) Patentinhaber: Torqeedo GmbH, 82234 Wessling (DE)
(72) Erfinder: Biebach, Jens, 82327 Tutzing (DE); Despineux, Frank, 82234 Weßling (DE); Flores, Philip, 82140 Olching (DE)
(74) Vertreter: Nordmeyer, Philipp Werner

(56) Entgegenhaltungen:
- EP-A1- 1 901 418
- DE-A1-102013 214 082
- FR-A1- 2 823 177
- US-A1- 2016 126 808

## Beschreibung

### Technisches Gebiet

Die vorliegende Erfindung betrifft einen Antrieb für ein Boot, welcher ein im Betrieb des Antriebs unter Wasser angeordnetes Gehäuse aufweist, in welchem ein Elektromotor zum Antrieb eines Propellers angeordnet ist. Typischerweise wird ein solcher Antrieb in Form eines Außenbordantriebs oder eines Pod-Antriebs für ein Boot, beispielsweise für ein Motorboot oder ein Segelboot, bereitgestellt.

### Stand der Technik

Aus dem Stand der Technik sind Pod-Antriebe und Außenbordantriebe für Boote bekannt, bei welchen ein im Betrieb des Antriebs in das das Boot umgebende Wasser eintauchendes Gehäuse vorgesehen ist, in welchem ein Elektromotor angeordnet ist, der zum Antrieb des eigentlichen Propellers, der für die Bereitstellung eines Schubs im Wasser und damit für die Fortbewegung des Bootes sorgt, vorgesehen ist.

Das Gehäuse wird dabei im Falle eines Außenbordantriebs über einen Schaft mit den weiteren Komponenten, insbesondere mit den über der Wasserlinie angeordneten Komponenten des Außenbordantriebes, verbunden. Am oberen Ende des Schaftes kann beispielsweise eine Steuereinheit, welche beispielsweise auch eine Pinne umfassen kann, vorgesehen sein. Am oberen Ende des Schaftes kann in bestimmten Ausführungsformen auch eine Batterie zum Versorgen des am unteren Ende des Schafts im Gehäuse vorgesehenen Elektromotors mit elektrischer Energie vorgesehen sein. Ein solcher Außenbordantrieb ist beispielsweise in Form des unter der Handelsbezeichnung "*Travel 1003*" von der Anmelderin vertriebenen Außenbordmotors bekannt.

Der Antrieb kann beispielsweise auch in Form eines Pod-Antriebes bereitgestellt werden, bei welchem ein Anbindungsfuß an der Unterseite des Rumpfes des anzutreibenden Bootes angebracht ist, wobei am unteren Ende des Anbindungsfußes wiederum das Gehäuse angeordnet ist, in welchem der Elektromotor aufgenommen ist, der zum Antrieb des Propellers dient, der dann zur Bereitstellung des Schubs im Wasser sorgt. Ein solcher Pod-Antrieb ist beispielsweise in Form des von der Anmelderin unter der Handelsbezeichnung "*Cruise 2.0 FP*" vertriebenen Pod-Antriebes bekannt.

Das Gehäuse, in welchem der Elektromotor aufgenommen ist und welches im Betrieb des Antriebs unter Wasser angeordnet ist und von diesem umströmt wird, ist üblicherweise stromlinienförmig ausgebildet, um einen möglichst geringen Wasserwiderstand aufzuweisen. Diese Anforderung steht im Wettstreit mit dem Bedürfnis, einen möglichst starken und damit einen großen Durchmesser aufweisenden Elektromotor in dem Gehäuse unterzubringen.

In dem im Betrieb unter Wasser angeordneten Gehäuse des Antriebs sind üblicherweise auch elektrische und/oder elektronische Komponenten, beispielsweise die Leistungselektronik und/oder ein Kommutator, vorgesehen. Sowohl der Elektromotor selbst, als auch die elektrischen und/oder elektronischen Komponenten erzeugen im Betrieb Abwärme, welche den Wirkungsgrad des Elektromotors beziehungsweise der elektrischen und/oder elektronischen Komponenten herabsetzen kann beziehungsweise die Lebensdauer der genannten Bestandteile des Antriebs verkürzen kann. Eine unzureichende Kühlung der elektronischen Komponenten kann die Lebensdauer herabsetzen.

Die DE 10 2013 214082 A1 offenbart einen elektrischen Gondelantrieb für ein Schiff. Die EP 1 901 418 A1 offenbart einen Scheibenläufermotor mit einem hocheffizienten Kühlsystem.

### Darstellung der Erfindung

Ausgehend von dem bekannten Stand der Technik ist es eine Aufgabe der vorliegenden Erfindung, einen Antrieb für ein Boot, welcher einen Elektromotor umfasst, bezüglich seines Wirkungsgrades und oder seiner Lebensdauer weiter zu verbessern.

Diese Aufgabe wird durch einen Antrieb mit den Merkmalen des Anspruchs 1 gelöst. Vorteilhafte Weiterbildungen ergeben sich aus den Unteransprüchen, der vorliegenden Beschreibung sowie den Figuren.

Entsprechend wird ein Antrieb für ein Boot mit einem im Betrieb des Antriebs unter Wasser angeordneten Gehäuse und mit einem in dem Gehäuse aufgenommenen Elektromotor zum Antrieb eines Propellers vorgeschlagen. In dem Gehäuse ist ein Kühlabschnitt vorgesehen, welcher mit einem Kühlmedienkanal versehen ist. Der Kühlmedienkanal steht über einen Kühlmedieneinlauf und über einen Kühlmedienauslauf durch das Gehäuse hindurch mit in der Umgebung des Gehäuses vorliegendem Wasser in Kommunikation. Das Gehäuse weist im Bereich des Kühlmedienauslaufs eine einen Unterdruck bereitstellende Einschnürung auf, so dass bei Bewegung des Gehäuses durch Wasser ein Unterdruck im Bereich des Kühlmedienauslaufs hervorgerufen wird.

Dadurch, dass ein Kühlabschnitt mit einem Kühlmedienkanal vorgesehen ist, kann Wärme aus dem Inneren des Gehäuses und insbesondere Wärme, welche durch den Betrieb des Elektromotors anfällt, über ein den Kühlmedienkanal durchfließendes Kühlmedium abgeführt werden. Auf diese Weise kann ein verbesserter Abtransport von Wärme aus dem den Elektromotor aufweisenden Gehäuse erreicht werden, wodurch der Wirkungsgrad des Elektromotors und/oder von im Gehäuse aufgenommenen elektrischen und/oder elektronischen Komponenten verbessert werden kann. Weiterhin kann auch die Lebensdauer der genannten Bestandteile des Antriebs auf diese Weise verbessert werden.

Durch die Abführung der Wärme aus dem Inneren des Gehäuses kann weiterhin auch die Gefahr eines Abschaltens des Antriebs aufgrund einer thermischen Schutzschaltung reduziert, eine Überhitzung kann besser vermieden werden und damit einer Zerstörung des Antriebs aus thermischen Gründen entgegengewirkt werden.

Weiterhin kann auch das Einsetzen eines Selbstschutzes des Motors durch Zurücknehmen der Leistung bei erhöhten Temperaturen, das auch als "de-rating" bezeichnet wird, verhindert werden oder zumindest zu höheren Temperaturen hin verschoben werden, so dass die entsprechenden Abschaltmechanismen oder eine Leistungsreduktion nicht oder erst zu einem späteren Zeitpunkt auftritt.

Der Kühlmedienkanal steht über einen Kühlmedieneinlauf durch das Gehäuse hindurch mit in der Umgebung des Gehäuses vorliegendem Wasser in Kommunikation und der Kühlmedienkanal steht über einen Kühlmedienauslauf durch das Gehäuse hindurch mit in der Umgebung des Gehäuses vorliegendem Wasser in Kommunikation. Damit ist es möglich, das ohnehin in der unmittelbaren Umgebung des Gehäuses vorliegende Wasser als Kühlmedium zu verwenden. Es werden keine weiteren Zuführungen und Abführungen für das Kühlmedium benötigt, sondern das den Kühlmedienkanal durchfließende Kühlmedium speist sich direkt aus dem umliegenden Wasser. Damit kann beim Betrieb des Antriebes das Gehäuse umgebende Wasser durch den Kühlmedienkanal strömen. Entsprechend kann das das Gehäuse des Antriebs ohnehin umgebende Wasser als Kühlmedium verwendet werden.

Der Kühlabschnitt kann als Elektronikträger ausgebildet sein und mit elektrischen und/oder elektronischen Komponenten in wärmeleitendem Kontakt stehen. Damit kann eine Kühlung und Abfuhr der durch die elektrischen und/oder elektronischen Komponenten erzeugten Wärme erreicht werden. Auf diese Weise kann der Wirkungsgrad der Komponenten erhöht werden und die Lebensdauer verlängert werden.

Der Kühlabschnitt kann auch als Lagerschild zum Lagern einer Antriebswelle des Elektromotors ausgebildet sein. Beispielsweise kann im Kühlabschnitt ein Festlager oder ein Loslager (beide Lager können beispielsweise als Wälzlager oder als Gleitlager ausgebildet sein) zum drehbaren Lagern der Antriebswelle des Elektromotors vorgesehen sein. Damit kann eine Doppelfunktion des Kühlabschnitts erreicht werden, dieses kann nämlich zum einen eine Kühlfunktion bereitstellen und zum anderen eine strukturelle Komponente zur Lagerung der Antriebswelle bereitstellen.

Der Kühlabschnitt kann auch zur Aufnahme oder zum Halten oder Lagern eines Getriebes oder von Getriebeteilen vorgesehen sein, um auf diese Weise eine Kühlung des Getriebes oder von Getriebeteilen zu erreichen. Beispielsweise kann der Kühlabschnitt als Hohlrad eines Planetengetriebes oder als Lagerschild einer Getriebewelle dienen und entsprechend Wärme von den genannten Komponenten abführen.

Ist der Kühlabschnitt als Elektronikträger und als Lagerschild ausgebildet, können die elektrischen und/oder elektronischen Komponenten bevorzugt an der Oberfläche des Kühlabschnitts vorgesehen sein, welche auf einer einem Rotor des Elektromotors abgewandten Seite angeordnet ist. Entsprechend kann die von diesen elektrischen und/oder elektronischen Komponenten erzeugte Abwärme zumindest teilweise über das in dem Kühlmedienkanal des Kühlabschnitts fließenden Kühlmedium abgeführt werden.

In einer bevorzugten Ausführungsform ist das Gehäuse aus einem wärmeisolierenden und/oder schwingungsdämpfenden Material ausgeführt, beispielsweise einem Kunststoffmaterial oder einem Verbundmaterial. Der Kühlabschnitt ist in dieser Ausführungsform natürlich aus einem gut wärmeleitenden Material auszubilden, um einen Wärmetransport von den im Gehäuse aufgenommenen Komponenten auf das Kühlmedium zu ermöglichen. Der Wärmetransport aus dem Gehäuse heraus wird hier entsprechend weitestgehend nur durch das Kühlmedium erreicht, so dass eine Wärmeabgabe über die Oberfläche des Gehäuses entsprechend nicht notwendig ist. Das Gehäuse und dessen Material kann daher beispielsweise auf geringe Geräuschemissionen hin optimiert werden, um auf diese Weise das Einsatzspektrum des Antriebs beispielsweise als Trolling-Antrieb zum Angeln, bei dem es auf Geräuscharmut ankommt, zu verbessern.

In einer weiteren bevorzugten Ausführungsform ist das Gehäuse aus einem wärmeleitenden Material ausgeführt, so dass ein Wärmeübertrag an das das Gehäuse umgebende Wasser auch über alle anderen Gehäuseteile stattfinden kann.

Bevorzugt ist der Kühlabschnitt einstückig mit dem Gehäuse ausgebildet. So kann ein exakterer Aufbau des Antriebs erreicht werden, da die Positionierung des Kühlabschnitts keinen Einbautoleranzen mehr unterliegt. Dies ist besonders vorteilhaft, wenn der Kühlabschnitt auch als Lagerschild und/oder als Elektronikträger ausgebildet ist. Auf diese Weise kann auch erreicht werden, dass eine besonders kostengünstige Herstellung des Gehäuses erreicht wird und gleichzeitig ein stabiler Aufbau des Kühlabschnitts und des Gehäuses erreicht wird.

Durch den einstückigen Aufbau können auch die bei einem mehrteiligen Aufbau notwendigen Dichtungen - beispielsweise zwischen dem Kühlabschnitt und dem Gehäuse - entfallen. Durch den einstückigen Aufbau wird weiterhin die Dichtheit gegen das Eindringen von Wasser in den Innenraum des Gehäuses sichergestellt, so dass der einstückige Aufbau einen sicheren Betrieb des Antriebs bei gleichzeitiger Kühlung bereitstellt.

In einer besonders bevorzugten Ausführungsform weist das Gehäuse im Bereich des Kühlmedieneinlaufes eine einen Überdruck bereitstellende Kontur, bevorzugt eine einen Staudruck bereitstellende Stufe oder eine einen Wirbel erzeugende Abrisskante, auf, so dass bei einer Bewegung des Gehäuses durch Wasser ein Überdruck im Bereich des Kühlmedieneinlaufs hervorgerufen wird. Damit kann durch die beim Betrieb des Antriebs ohnehin vorliegende Umströmung des Gehäuses mit Wasser gleichzeitig ein Durchfließen des Kühlmedienkanals mit Wasser erreicht werden. Separate Pumpvorrichtungen zum Pumpen des Wassers durch den Kühlmedienkanal sind entsprechend nicht notwendig. Lediglich die Bewegung des Gehäuses durch das Wasser sorgt für eine Durchströmung des Kühlmedienkanals. Auf diese Weise kann Wärme aus dem Inneren des Gehäuses und insbesondere vom Kühlabschnitt an das das Gehäuse umgebende Wasser effizient abtransportiert werden. Es handelt sich gleichzeitig auch um eine passive Kühlung, da ein Pumpen des Wassers als Kühlmedium nicht notwendig ist.

Das Gehäuse weist im Bereich des Kühlmedienauslaufs eine einen Unterdruck bereitstellende Kontur auf, in Form einer einen Unterdruck bereitstellende Einschnürung, so dass bei Bewegung des Gehäuses durch Wasser ein Unterdruck im Bereich des Kühlmedienauslaufs hervorgerufen wird. Damit kann durch die beim Betrieb des Antriebs ohnehin vorliegende Umströmung des Gehäuses mit Wasser gleichzeitig ein Durchfließen des Kühlmedienkanals mit Wasser erreicht werden. Separate Pumpvorrichtungen zum Pumpen des Wassers durch den Kühlmedienkanal sind entsprechend nicht notwendig. Lediglich die Bewegung des Gehäuses durch das Wasser sorgt für eine Durchströmung des Kühlmedienkanals. Auf diese Weise kann Wärme aus dem Inneren des Gehäuses und insbesondere vom Kühlabschnitt an das das Gehäuse umgebende Wasser effizient abtransportiert werden. Es handelt sich gleichzeitig auch um eine passive Kühlung, da ein Pumpen des Wassers als Kühlmedium nicht notwendig ist.

Durch eine gleichzeitige Ausbildung einer einen Überdruck bereitstellenden Kontur im Bereich des Kühlmedieneinlaufs und einer einen Unterdruck bereitstellenden Einschnürung im Bereich des Kühlmedienauslaufs kann ein besonders effizienter und leistungsfähiger, gleichzeitig aber passiver, Transport von Umgebungswasser durch den Kühlmedienkanal erreicht werden.

Bevorzugt sind mehrere Kühlmedienkanäle im Kühlabschnitt vorgesehen, welche entweder über einen zentralen Kühlmedieneinlauf und/oder einen zentralen Kühlmedienauslauf, oder aber über mehrere Kühlmedieneinläufe und/oder mehrere Kühlmedienausläufe mit der Umgebung des Gehäuses in Kommunikation stehen. Auf diese Weise kann ein effizientes Ableiten von Wärme aus dem Innenraum des Gehäuses und insbesondere vom Kühlabschnitt erreicht werden, wobei eine homogene Verteilung des Wärmeabtransports über die Fläche des Kühlabschnitts hinweg erreicht werden kann, wenn die Geometrie der Kühlmedienkanäle entsprechend angepasst ist.

Durch die Ausgestaltung der Kühlmedieneinläufe und Kühlmedienausläufe derart, dass am Kühlmedieneinlauf ein höherer Druck anliegt, als am Kühlmedienauslauf, kann bei einer Umströmung des Gehäuses mit dem Kühlmedium, also typischerweise Wasser, ein Durchfließen des Kühlmedienkanals mit dem Medium erreicht werden, ohne dass zusätzlich ein Pumpen des Kühlmediums erforderlich wäre. Entsprechend kann auf weitere mechanische Komponenten verzichtet werden und eine Durchströmung des Kühlmedienkanals wird lediglich durch das Bewegen des Gehäuses relativ zum Umgebungsmedium erreicht.

In einer weiteren Ausführungsform ist der Kühlmedienkanal bevorzugt schräg zur üblichen Vorwärts-Fahrtrichtung angeordnet, so dass sich eine automatische Durchstömung des Kühlmedienkanals durch die relative Fahrtgeschwindigkeit durchs Wasser ergibt.

In einer weiteren Ausführungsart weist der Kühlmedienkanal einen in Vorwärts-Fahrtrichtung nach vorn ausgerichteten Einlass, und einen nach hinten ausgerichteten Auslass auf. Der Einlass und der Auslass können auf unterschiedlichen Höhen im Gehäuse angeordnet sein - beispielsweise der Einlass vorne oben und der Auslass hinten unten - so dass sich durch Staudruck und Anströmung ein Durchfluss durch den Kühlmedienkanal ergibt.

Der Kühlabschnitt und das Gehäuse sind bevorzugt aus einem gut wärmeleitenden Material, beispielsweise einem metallischen Material ausgebildet, derart, dass neben der Wärmeübertragung an das Kühlmedium auch eine Wärmeübertragung über den Materialkontakt beziehungsweise das Material zwischen dem Kühlabschnitt und der Außenseite des Gehäuses zum Wärmeabtransport verwendet werden kann.

### Kurze Beschreibung der Figuren

Bevorzugte weitere Ausführungsformen der Erfindung und nicht unter die Erfindung fallende Varianten ("Varianten" im Folgenden) werden durch die nachfolgende Beschreibung der Figuren näher erläutert. Dabei zeigen:
- Figur 1: eine schematische seitliche Schnittansicht eines Antriebs gemäß einer ersten Variante
- Figur 2: eine schematische geschnittene Detailansicht eines Antriebs gemäss einer zweiten Variante
- Figur 3: eine weitere schematische geschnittene Detailansicht eines Antriebs in einem ersten Ausführungsbeispiel;
- Figur 4: eine schematische Schnittdarstellung eines Kühlabschnitts, wobei drei Kühlmedienkanäle sichtbar sind;
- Figur 5: eine weitere schematische Schnittdarstellung eines Kühlabschnitts in einer weiteren Ausführungsform, in der eine weitere Anordnung der Kühlmedienkanäle gewählt ist; und
- Figur 6: eine weitere schematische geschnittene Detailansicht eines Antriebs in einem weiteren Ausführungsbeispiel.

### Detaillierte Beschreibung bevorzugter Ausführungsbeispiele

Im Folgenden werden bevorzugte Ausführungsbeispiele und Varianten anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

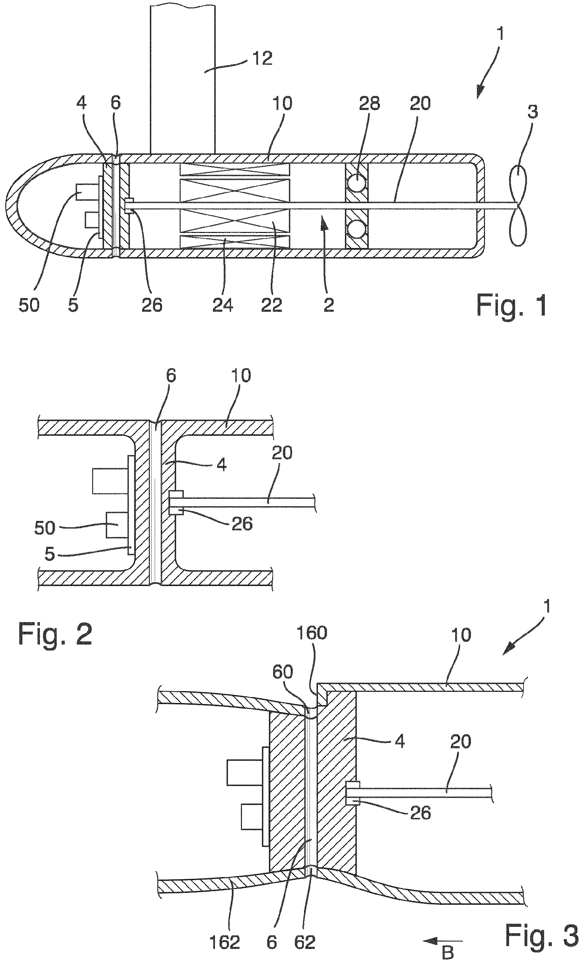

In Figur 1 ist eine schematische Schnittdarstellung eines Antriebs 1 für ein hier nicht gezeigtes Boot dargestellt. Der Antrieb 1 umfasst ein Gehäuse 10, in welchem ein schematisch angedeuteter Elektromotor 2 aufgenommen ist. Das Gehäuse 10 kann über einen Anbindungsfuß 12 an dem Boot befestigt werden.

Das Gehäuse 10 kann aus mehreren Teilen zusammengesetzt sein oder im Wesentlichen nur in Form einer Hülse mit Deckel vorgesehen sein. Bevorzugt ist das Gehäuse 10 stromlinienförmig ausgeformt, um den Strömungswiderstand des Antriebs 1 zu verkleinern.

Der Anbindungsfuß 12 kann beispielsweise entweder der Schaft eines Außenbordantriebs oder aber ein Anbindungsfuß eines Pod-Antriebes sein.

Im Falle eines Außenbordantriebes könnte der Anbindungsfuß 12 in Form eines Schaftes beispielsweise in bekannter Weise am Spiegel des Bootes schwenkbar gehalten. Im Falle eines Pod-Antriebes könnte der Anbindungsfuß 12 an der Unterseite des Rumpfes unterhalb der Wasserlinie des Bootes am Rumpf angebunden sein.

Der schematisch angedeutete Elektromotor 2 weist eine Motorwelle 20, einen Rotor 22 und einen Stator 24 auf. Die Antriebswelle 20 ist in einem Festlager 26 und einem Loslager 28 drehbar gehalten, wobei in der gezeigten Variante die Antriebswelle 20 mit einem Propeller 3 starr verbunden ist. Der Propeller 3 sorgt bei Rotation im Wasser für das Bereitstellen des Schubs des Antriebes 1, der schließlich für die Fortbewegung des Boots sorgt.

In einer hier nicht gezeigten Variante kann zwischen der Antriebswelle 20 und dem Propeller 3 beziehungsweise einer separaten Propellerwelle auch ein hier nicht gezeigtes Getriebe zwischengeschaltet sein, um beispielsweise eine Untersetzung bereit zu stellen.

In der gezeigten Variante ist das Festlager 26 des Elektromotors 2 in einem im Gehäuse 10 vorliegenden Kühlabschnitt 4 aufgenommen und wird von diesem gehalten. Der Kühlabschnitt 4 wirkt entsprechend wie ein Lagerschild.

Der Kühlabschnitt 4 kann im Inneren des Gehäuses 10 fest angeordnet sein. Eine Verbindung des Kühlabschnitts 4 mit dem Gehäuse 10 kann beispielsweise darüber erreicht werden, dass der Kühlabschnitt 4 mit dem Gehäuse 10 verklebt ist, verschweißt ist, formschlüssig in diesem aufgenommen ist, oder mit diesem verschraubt ist.

In einer weiteren Variante welche schematisch in Figur 2 gezeigt ist, kann der Kühlabschnitt 4 auch einstückig mit dem Gehäuse 10 beziehungsweise einem Teil des Gehäuses 10 ausgebildet sein.

An der dem Elektromotor 2 beziehungsweise dem Rotor 22 des Elektromotors 2 abgelegenen Seite des Kühlabschnitts 4 kann eine Platine 5 vorgesehen sein, auf welcher elektrische und/oder elektronische Komponenten 50 angeordnet sind. Die elektrischen und/oder elektronischen Komponenten 50 und/oder die Platine 5 sind wärmeleitend mit dem Kühlabschnitt 4 verbunden, so dass die von den elektrischen und/oder elektronischen Komponenten abfallende Abwärme zumindest teilweise an den Kühlabschnitt 4 fließen kann. Die elektrischen und/oder elektronischen Komponenten 50 können der Ansteuerung des Elektromotors 2 dienen.

Um die an den elektrischen und/oder elektronischen Komponenten 50 beziehungsweise der Platine 5 anfallende Wärme, welche zumindest teilweise an den Kühlabschnitt 4 fließen kann, und/oder um die Wärme, welche durch den Elektromotor 2 erzeugt wird, zumindest teilweise an die Umgebung abzuleiten, ist in dem Kühlabschnitt 4 ein Kühlmedienkanal 6 vorgesehen. Der Kühlmedienkanal 6 dient dazu, ein Kühlmedium durch den Kühlabschnitt 4 hindurchströmen zu lassen, um Wärme aus dem Kühlabschnitt 4 abzutransportieren.

In der in Figur 1 gezeigten Variante tritt der Kühlmedienkanal 6 auch durch die Wand des Gehäuses 10 derart hindurch, dass der im Kühlabschnitt 4 vorgesehene Kühlmedienkanal 6 mit der Umgebung außerhalb des Gehäuses 10 beziehungsweise der Außenseite des Antriebes 1 kommunizieren kann. Mit anderen Worten kann Kühlmedium von der Außenseite des Gehäuses 10 in den Kühlmedienkanal 6 eintreten und aus diesem wieder auf die Außenseite des Gehäuses 10 treten.

Im Betrieb des Antriebes 1 ist zumindest das Gehäuse 10 im Wasser so eingetaucht, dass auch der Propeller 3 im Wasser eingetaucht ist, um auf diese Weise den Schub für das Boot bereitzustellen. Damit steht der Kühlmedienkanal 6 entsprechend ebenfalls mit dem das Gehäuse 10 des Antriebs 1 umgebenden Wasser in direkter Verbindung, so dass Wasser den Kühlmedienkanal 6 durchströmen kann und entsprechend zum Abtransport von Wärme aus dem Inneren des Gehäuses 10 zur Verfügung steht.

Durch das im Kühlmedienkanal 6 des Kühlabschnitts 4 des Antriebs 1 vorliegende Wasser kann entsprechend die im Gehäuse 10 durch den Elektromotor 2 und/oder die elektrischen und/oder elektronischen Komponenten 50 anfallende Abwärme zumindest teilweise an das Kühlmedium, in diesem Fall an das Wasser, übertragen werden, so dass eine effiziente Abfuhr der Wärme ermöglicht wird. Damit kann die Wärme aus dem Antrieb 1 ausgetragen werden, wodurch der Wirkungsgrad des Elektromotors 2 und/oder der elektrischen und/oder elektronischen Komponenten 50 erhöht werden kann und/oder die Lebensdauer der genannten Bestandteile des Antriebes 1 erhöht werden kann.

Das Material des Gehäuses 10 und das Material des Kühlabschnitts 4 können entweder identisch gewählt sein, oder es können auch unterschiedliche Materialien verwendet werden.

Um eine gute Wärmeübertragung zwischen dem Innenraum des Gehäuses 10 und insbesondere dem Elektromotor 2 und/oder den elektronischen und/oder elektrischen Komponenten 50 und dem im Kühlmedienkanal 6 vorliegenden Kühlmedium zu ermöglichen, ist der Elektronikträger 4 bevorzugt aus einem gut wärmeleitfähigen Material hergestellt - beispielsweise aus einem Metallmaterial.

Da in der in Figur 1 gezeigten Variante der Wärmeabtransport über das in dem Kühlmedienkanal 6 vorliegende Kühlmedium, beispielsweise durch das das Gehäuse 10 umgebende Wasser, erreicht wird, muss ein Wärmeabtransport über die Oberfläche des Gehäuses 10 nicht unbedingt stattfinden. Das Gehäuse 10 kann entsprechend auch aus einem weniger gut wärmeleitfähigen Material, beispielsweise einem Kunststoffmaterial oder einem Verbundmaterial, hergestellt werden, so dass das Gehäuse 10 beispielsweise besonders kostengünstig und/oder mit einem besonders geringen Gewicht und/oder einer besonders geringen Korrosionsneigung und/oder mit einer vorgegebenen akustischen Bedämpfung hergestellt werden kann, ohne dass auf die thermischen Eigenschaften des Materials des Gehäuses 10 geachtet werden muss. Gleichzeitig kann aber dennoch eine Abfuhr der Wärme aus dem Gehäuse 10 über das Kühlmedium erreicht werden.

In der in Figur 2 gezeigten Variante sind das Gehäuse 10 und das Kühlabschnitt 4 einstückig ausgebildet, sodass hier sowohl der Elektronikträger 4 als auch das Gehäuse 10, beziehungsweise ein Abschnitt des Gehäuses 10, aus dem gleichen, bevorzugt gut wärmeleitfähigen, Material hergestellt sind. Durch die einstückige Ausbildung des Gehäuses 10 mit dem Kühlabschnitt 4 kann eine besonders zuverlässige Lagerung der Antriebswelle 20 des Elektromotors 2 erreicht werden, da Fertigungstoleranzen beim Zusammenbau des Kühlabschnitts 4 und des Gehäuses 10 vermieden werden können.

Auch hier ist in dem Kühlabschnitt 4 ein Kühlmedienkanal 6 vorgesehen, welcher entsprechend ein Durchströmen mit Wasser aus der Umgebung des Gehäuses 10 ermöglicht.

In Figur 3 ist in einem Ausführungsbeispiel eine besondere Ausführung eines Kühlmedieneinlaufs 60 und des Kühlmedienauslaufs 62 des Kühlmedienkanals 6 im Gehäuse 10 gezeigt.

Der Kühlmedienkanal 6 weist entsprechend einen Kühlmedieneinlauf 60 und einen Kühlmedienauslauf 62 auf. Im Bereich des Kühlmedieneinlaufs 60 weist die Kontur des Gehäuses 10 in Bewegungsrichtung B des Antriebs 1 hinter dem Kühlmedieneinlauf 60 eine Stufe 160 auf, welche als Staustufe wirkt. Bewegt sich nun der Antrieb 1 in der Bewegungsrichtung B durch das Wasser, wird ein Staudruck des das Gehäuse 10 umströmenden Wassers an der Stufe 160 erzeugt, welcher für einen leichten Überdruck im Bereich des Kühlmedieneinlaufs 60 sorgt. Durch den leichten Überdruck im Bereich des Kühlmedieneinlaufs 60, welcher aufgrund des Staudrucks an der Stufe 160 stattfindet, findet ein Einströmen des das Gehäuse 10 umgebenden Wassers in den Kühlmedienkanal 6 statt.

Im Bereich des Kühlmedienauslaufs 62 ist hingegen eine Einschnürung 162 in Bewegungsrichtung B vor dem Kühlmedienauslauf 62 vorgesehen, welche in Bewegungsrichtung B hinter dem Kühlmedienauslauf 62 stetig wieder auf die ursprüngliche Außenkontur des Gehäuses 10 geführt ist, so dass entsprechend kein Aufstauen sondern ein Beschleunigen des vorbeiströmenden Wassers stattfindet. Auf diese Weise entsteht im Bereich des Kühlmedienauslaufs 62 bei der Bewegung des Antriebs 1 in Bewegungsrichtung B durch das umströmende Wasser ein leichter Unterdruck.

Durch die in Figur 3 schematisch gezeigte Ausprägung des Kühlmedieneinlaufs 60 und der diesen umgebenden Kontur des Gehäuses 10 und/oder der gezeigten Ausprägung des Kühlmedienauslaufs 62 und der diesen umgebenden Kontur des Gehäuses 10 ergibt sich entsprechend bei einer Bewegung des Antriebes 1 entlang der Bewegungsrichtung B durchs Wasser, dass am Kühlmedieneinlauf 60 ein leichter Überdruck und/oder am Kühlmedienauslauf 62 ein leichter Unterdruck entsteht.

Durch die Bewegung des Antriebs 1 in Bewegungsrichtung B durch das Wasser entstehen daher Druckverhältnisse, welche für einen Transport von Wasser aus der Umgebung durch den Kühlmedienkanal 6 hindurch sorgen.

Innerhalb eines bestimmten Druckfensters sind die an den entsprechenden Konturen des Gehäuses 10 entstehenden Drücke abhängig von der Strömungsgeschwindigkeit des Wassers entlang des Gehäuses 10, so dass entsprechend bei einer höheren Strömungsgeschwindigkeit des Wassers und damit typischerweise auch einer höheren Belastung des Elektromotors 2 sowie der elektronischen und/oder elektrischen Komponenten 50 auch ein höherer Wasserstrom durch den Kühlmedienkanal 6 hindurchströmt. Damit passt sich zumindest innerhalb eines bestimmten Geschwindigkeitsbereichs die mittels des durchströmenden Wassers bereitgestellte Kühlleistung an die Bewegungsgeschwindigkeit des Antriebs 1 relativ zu dem umgebenden Wasser an.

In den gezeigten Varianten und Ausführungsbeispielen ist lediglich ein Kühlmedienkanal 6 gezeigt. Es können jedoch auch zwei oder mehr Kühlmedienkanäle 6 durch den Kühlabschnitt 4 hindurch treten, um entsprechend die Kühlleistung zu erhöhen beziehungsweise die Kühlleistung gleichmäßiger über die Fläche des Kühlabschnitts 4 hinweg zu verteilen.

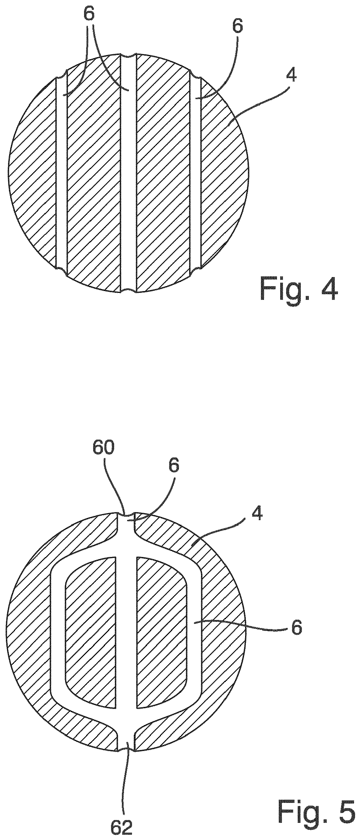

Schematisch ist in Figur 4 eine Schnittdarstellung durch einen Kühlabschnitt 4 gezeigt, in welchem entsprechend drei Kühlmedienkanäle 6 vorgesehen sind, durch welche hindurch Wasser strömen kann. Auf diese Weise kann das den Kühlabschnitt 4 durchströmende Wasservolumen und damit die Kühlleistung erhöht werden und/oder die einzelnen Kühlmedienkanäle 6 können in ihrem Querschnitt gegenüber einem eine geringere Anzahl an Kühlmedienkanälen 6 aufweisenden Kühlabschnitt 4 reduziert werden, wodurch auch die Dicke des Kühlabschnitts 4 und damit dessen Gewicht reduziert werden kann und/oder der Wärmetransport kann gleichmäßiger an die Oberfläche des Kühlabschnitts 4 angepasst werden.

In Figur 5 ist schematisch eine alternative Ausführungsform gezeigt, bei welcher sich der Kühlmedienkanal 6 in dem Kühlabschnitt 4 innerhalb des Kühlabschnitts 4 verzweigt, um eine verbesserte Verteilung der Kühlleistung über die Oberfläche des Kühlabschnitts 4 hinweg zu erreichen. Damit kann eine geringere Anzahl an Kühlmedieneinläufen 60 und Kühlmedienausläufen 62 vorliegen, als Kühlmedienkanäle 6 innerhalb des Kühlabschnitts 4 vorgesehen sind, um auf diese Weise die hydrodynamischen Eigenschaften des Antriebs 1 zu verbessern.

Es versteht sich, dass die hier zu dem Kühlabschnitt 4, in welchem das Festlager 26 angeordnet ist und an welchem die elektrischen und/oder elektronischen Komponenten 50 zur Ansteuerung des Elektromotors 2 angeordnet sind, beschriebenen Ausprägungen des Kühlmedienkanals 6 auch auf einen als Elektronikträger ausgebildeten Kühlabschnitt 4 innerhalb des Gehäuses 10 des Antriebs 1 anwendbar sind. Beispielsweise kann auch ein als Elektronikträger ausgebildeter Kühlabschnitt 4 vorgesehen sein, in welchem beispielsweise auch das Loslager 28 gehalten ist, mit einem Kühlmedienkanal gemäß der oben genannten Beschreibung versehen sein. Es können auch zwei Kühlabschnitte oder mehrere Kühlabschnitte mit Kühlmedienkanälen in der vorbeschriebenen Form versehen sein.

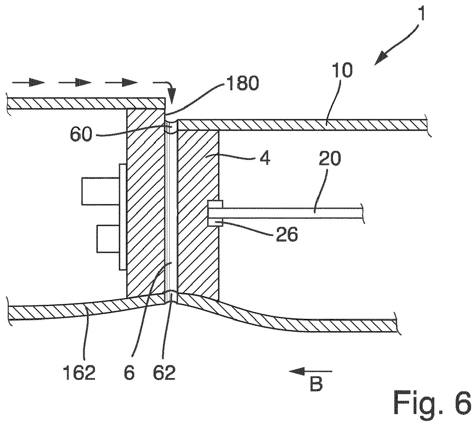

In Figur 6 ist in einem weiteren Ausführungsbeispiel eine besondere Ausführung eines Kühlmedieneinlaufs 60 und des Kühlmedienauslaufs 62 des Kühlmedienkanals 6 im Gehäuse 10 gezeigt.

Der Kühlmedienkanal 6 weist entsprechend einen Kühlmedieneinlauf 60 und einen Kühlmedienauslauf 62 auf. Im Bereich des Kühlmedieneinlaufs 60 weist die Kontur des Gehäuses 10 in Bewegungsrichtung B des Antriebs 1 vor dem Kühlmedieneinlauf 60 eine Abrisskante 180 auf, hinter welcher ein Wirbel entsteht. Die entstehende Strömungsstruktur entspricht in etwa einem "Kehrwasser" in einem Fluss. Bewegt sich nun der Antrieb 1 in der Bewegungsrichtung B durch das Wasser, wird ein Wirbel des das Gehäuse 10 umströmenden Wassers hinter der Abrisskante 180 erzeugt, welcher für einen leichten Überdruck im Bereich des Kühlmedieneinlaufs 60 sorgt. Durch den leichten Überdruck im Bereich des Kühlmedieneinlaufs 60, welcher aufgrund des Wirbels an der Abrisskante 180 stattfindet, findet ein Einströmen des das Gehäuse 10 umgebenden Wassers in den Kühlmedienkanal 6 statt.

Im Bereich des Kühlmedienauslaufs 62 ist hingegen wiederum eine Einschnürung 162 in Bewegungsrichtung B vor dem Kühlmedienauslauf 62 vorgesehen, welche in Bewegungsrichtung B hinter dem Kühlmedienauslauf 62 stetig wieder auf die ursprüngliche Außenkontur des Gehäuses 10 geführt ist, so dass entsprechend kein Aufstauen sondern ein Beschleunigen des vorbeiströmenden Wassers stattfindet. Auf diese Weise entsteht im Bereich des Kühlmedienauslaufs 62 bei der Bewegung des Antriebs 1 in Bewegungsrichtung B durch das umströmende Wasser ein leichter Unterdruck.

Durch die in Figur 6 schematisch gezeigte Ausprägung des Kühlmedieneinlaufs 60 und der diesen umgebenden Kontur des Gehäuses 10 und/oder der gezeigten Ausprägung des Kühlmedienauslaufs 62 und der diesen umgebenden Kontur des Gehäuses 10 ergibt sich entsprechend bei einer Bewegung des Antriebes 1 entlang der Bewegungsrichtung B durchs Wasser, dass am Kühlmedieneinlauf 60 ein leichter Überdruck aufgrund des Wirbels und/oder am Kühlmedienauslauf 62 ein leichter Unterdruck entsteht.

Durch die Bewegung des Antriebs 1 in Bewegungsrichtung B durch das Wasser entstehen daher Druckverhältnisse, welche für einen Transport von Wasser aus der Umgebung durch den Kühlmedienkanal 6 hindurch sorgen.

Innerhalb eines bestimmten Druckfensters sind die an den entsprechenden Konturen des Gehäuses 10 entstehenden Drücke abhängig von der Strömungsgeschwindigkeit des Wassers entlang des Gehäuses 10, so dass entsprechend bei einer höheren Strömungsgeschwindigkeit des Wassers und damit typischerweise auch einer höheren Belastung des Elektromotors 2 sowie der elektronischen und/oder elektrischen Komponenten 50 auch ein höherer Wasserstrom durch den Kühlmedienkanal 6 hindurchströmt. Damit passt sich zumindest innerhalb eines bestimmten Geschwindigkeitsbereichs die mittels des durchströmenden Wassers bereitgestellte Kühlleistung an die Bewegungsgeschwindigkeit des Antriebs 1 relativ zu dem umgebenden Wasser an.

In den gezeigten Ausführungsbeispielen und Varianten ist lediglich ein Kühlmedienkanal 6 gezeigt. Es können jedoch auch zwei oder mehr Kühlmedienkanäle 6 durch den Kühlabschnitt 4 hindurch treten, um entsprechend die Kühlleistung zu erhöhen beziehungsweise die Kühlleistung über die Fläche des Kühlabschnitts 4 hinweg zu verteilen.

## Patentansprüche

1. Antrieb (1) für ein Boot mit einem im Betrieb des Antriebs (1) unter Wasser angeordneten Gehäuse (10) und mit einem in dem Gehäuse (10) aufgenommenen Elektromotor (2) zum Antrieb eines Propellers (3),
wobei in dem Gehäuse (10) ein Kühlabschnitt (4) vorgesehen ist, welcher mit einem Kühlmedienkanal (6) versehen ist,
wobei der Kühlmedienkanal (6) über einen Kühlmedieneinlauf (60) und über einen Kühlmedienauslauf (62) durch das Gehäuse (10) hindurch mit in der Umgebung des Gehäuses (10) vorliegendem Wasser in Kommunikation steht,
**dadurch gekennzeichnet, dass**
das Gehäuse (10) im Bereich des Kühlmedienauslaufs (62) eine einen Unterdruck bereitstellende Einschnürung (162) aufweist, so dass bei Bewegung des Gehäuses (10) durch Wasser ein Unterdruck im Bereich des Kühlmedienauslaufs (62) hervorgerufen wird.

2. Antrieb (1) gemäß Anspruch 1, **dadurch gekennzeichnet, dass** der Kühlabschnitt (4) als Elektronikträger ausgebildet ist und elektrische und/oder elektronische Komponenten (50) mit dem Kühlabschnitt (4) in wärmeleitendem Kontakt stehen.

3. Antrieb (1) gemäß Anspruch 1 oder 2, **dadurch gekennzeichnet, dass** der Kühlabschnitt (4) als Lagerschild zum Lagern einer Antriebswelle (20) des Elektromotors (2) ausgebildet ist.

4. Antrieb (1) gemäß Anspruch 3, **dadurch gekennzeichnet, dass** im Kühlabschnitt (4) ein Festlager (26) oder ein Loslager (28) zum drehbaren Lagern der Antriebswelle (20) des Elektromotors (2) vorgesehen ist.

5. Antrieb (1) gemäß einem der vorstehenden Ansprüche, **dadurch gekennzeichnet, dass** der Kühlabschnitt (4) zur Aufnahme oder zum Halten oder Lagern eines Getriebes oder von Getriebeteilen vorgesehen ist, wobei der Kühlabschnitt (4) bevorzugt als Hohlrad eines Planetengetriebes oder als Lagerschild einer Getriebewelle ausgebildet ist.

6. Antrieb (1) gemäß einem der vorstehenden Ansprüche, **dadurch gekennzeichnet, dass** das Gehäuse (10) aus einem wärmeisolierenden und/oder schwingungsdämpfenden Material ausgeführt ist.

7. Antrieb (1) gemäß einem der vorstehenden Ansprüche, **dadurch gekennzeichnet, dass** der Kühlabschnitt (4) einstückig mit dem Gehäuse (10) ausgebildet ist.

8. Antrieb (1) gemäß einem der vorstehenden Ansprüche, **dadurch gekennzeichnet, dass** das Gehäuse (10) im Bereich des Kühlmedieneinlaufes (60) eine einen Überdruck bereitstellende Kontur, bevorzugt eine einen Staudruck bereitstellende Stufe (160) oder eine einen Wirbel hervorrufende Abrisskante (180), aufweist, so dass bei einer Bewegung des Gehäuses (10) durch Wasser ein Überdruck im Bereich des Kühlmedieneinlaufs (60) hervorgerufen wird.

## Claims

1. Drive (1) for a boat, having a housing (10) arranged underwater during operation of the drive (1) and having an electric motor (2) accommodated in the housing (10) for driving a propeller (3),
wherein a cooling section (4) is provided in the housing (10), which cooling section (4) is provided with a coolant duct (6),
wherein the coolant duct (6) is in communication with water present in the vicinity of the housing (10) via a coolant inlet (60) and via a coolant outlet (62) through the housing (10),
**characterised in that**
the housing (10) has, in the region of the coolant outlet (62), a constriction (162) providing a negative pressure, such that during movement of the housing (10) through water, a negative pressure is generated in the region of the coolant outlet (62).

2. Drive (1) according to claim 1, **characterised in that** the cooling section (4) is designed as an electronics carrier and electrical and/or electronic components (50) are in thermally conductive contact with the cooling section (4).

3. Drive (1) according to claim 1 or 2, **characterised in that** the cooling section (4) is designed as a bearing shield for bearing a drive shaft (20) of the electric motor (2).

4. Drive (1) according to claim 3, **characterised in that** a fixed bearing (26) or a floating bearing (28) is provided in the cooling section (4) for rotatably bearing the drive shaft (20) of the electric motor (2).

5. Drive (1) according to any one of the preceding claims, **characterised in that** the cooling section (4) is provided for receiving or holding or bearing a gearbox or gearbox parts, wherein the cooling section (4) is preferably designed as a ring gear of a planetary gear or as a bearing shield of a gear shaft.

6. Drive (1) according to any one of the preceding claims, **characterised in that** the housing (10) is made of a heat-insulating and/or vibration-damping material.

7. Drive (1) according to any one of the preceding claims, **characterised in that** the cooling section (4) is formed integrally with the housing (10).

8. Drive (1) according to any one of the preceding claims, **characterised in that** the housing (10) has, in the region of the coolant inlet (60), a contour providing an overpressure, preferably a step (160) providing a dynamic pressure or a tear-off edge (180) causing a vortex, such that upon moving the housing (10) through water, an overpressure is generated in the region of the coolant inlet (60).

## Revendications

1. Entraînement (1) pour un bateau présentant un boîtier (10) disposé sous l'eau pendant le fonctionnement de l'entraînement (1) et présentant un moteur électrique (2) intégré au boîtier (10) pour l'entraînement d'une hélice (3),
dans lequel une section de refroidissement (4) est prévue dans le boîtier (10), laquelle section est pourvue d'un canal de réfrigérants (6),
dans lequel le canal de réfrigérants (6) communique avec l'eau présente autour du boîtier (10) via une entrée de réfrigérants (60) et via une sortie de réfrigérants (62) à travers le boîtier (10),
**caractérisé en ce que**
le boîtier (10) présente dans la zone de la sortie de réfrigérants (62) un rétrécissement fournissant une pression négative, de sorte que, lors d'un déplacement du boîtier (10) par l'eau, une pression négative est induite dans la zone de la sortie de réfrigérants (62).

2. Entraînement (1) selon la revendication 1, **caractérisé en ce que** la section de refroidissement (4) est conçue comme support électronique et des composants électriques et/ou électroniques (50) sont en contact thermoconducteur avec la section de refroidissement (4).

3. Entraînement (1) selon la revendication 1 ou 2, **caractérisé en ce que** la section de refroidissement (4) est conçue comme flasque pour supporter un arbre d'entraînement (20) du moteur électrique (2).

4. Entraînement (1) selon la revendication 3, **caractérisé en ce qu'**un palier fixe (26) ou un palier libre (28) est prévu dans la section de refroidissement (4) pour le support rotatif de l'arbre d'entraînement (20) du moteur électrique (2).

5. Entraînement (1) selon l'une quelconque des revendications précédentes, **caractérisé en ce que** la section de refroidissement (4) est prévue pour la réception ou le maintien ou le support d'une transmission ou de pièces de transmission, dans lequel la section de refroidissement (4) est conçue de préférence comme couronne d'un engrenage planétaire ou comme flasque d'un arbre de transmission.

6. Entraînement (1) selon l'une quelconque des revendications précédentes, **caractérisé en ce que** le boîtier (10) est réalisé à partir d'un matériau thermiquement isolant et/ou d'un matériau amortissant les vibrations.

7. Entraînement (1) selon l'une quelconque des revendications précédentes, **caractérisé en ce que** la section de refroidissement (4) est conçue d'un seul tenant avec le boîtier (10).

8. Entraînement (1) selon l'une quelconque des revendications précédentes, **caractérisé en ce que** le boîtier (10) présente dans la zone de l'entrée de réfrigérants 60) un contour fournissant une pression négative, de préférence un niveau (160) fournissant une pression dynamique ou une arête de rupture (180) provoquant un tourbillon, de sorte que, lors d'un déplacement du boîtier (10) par l'eau, une pression négative est induite dans la zone de l'entrée de réfrigérants (60).
